# EUROPÄISCHE PATENTANMELDUNG

(11) **EP 2 535 157 A1**
(43) Veröffentlichungstag der Anmeldung: **19.12.2012**
(21) Anmeldenummer: 12157105.3
(22) Anmeldetag: 27.02.2012
(51) Int. Cl.: B27M 1/08, B27C 1/12, B27B 25/04, B23Q 7/03, B65G 15/58

(54) **Riemen- oder Kettentrieb**

(30) Priorität: 14.06.2011 DE 102011104177
(71) Anmelder: Hundegger, Hans, 87749 Hawangen (DE)
(72) Erfinder: Hundegger, Hans, 87749 Hawangen (DE)
(74) Vertreter: Charrier, Rapp & Liebau

(57) **Zusammenfassung**

Die Erfindung betrifft einen Riemen- oder Kettentrieb mit mindestens einem, über Antriebs-oder Umlenkscheiben (2, 3) geführten, riemen- oder kettenförmigen Antriebsorgan (1). Zur genauen Erfassung der Bewegung oder zum exakten Transport eines Bauteils sind in dem riemen- oder kettenförmigen Antriebsorgan (1) quer zur Bewegungsrichtung des Antriebsorgans (1) zwischen einer Rückzugsstellung und einer ausgefahrenen Mitnahmestellung bewegliche Mitnahmeelemente (7) angeordnet und dem Antriebsorgan (1) ist eine Betätigungseinrichtung (11) zugeordnet, durch welche die Mitnahmeelemente (7) in einem nicht gekrümmten Bereich des Antriebsorgans (1) in die Mitnahmestellung bewegbar sind.

## Beschreibung

Die Erfindung betrifft einen Riemen- oder Kettentrieb mit mindestens einem über Antriebs-oder Umlenkscheiben geführten, riemen- oder kettenförmigen Antriebsorgan nach dem Oberbegriff des Anspruchs 1.

Riemen- oder Kettentriebe der eingangs genannten Art werden üblicherweise zur Leistungsübertragung zwischen Wellen mit größerem Abstand eingesetzt. Derartige Riemen-oder Kettentriebe können aber auch als Transport- oder Messeinrichtungen an Abbundanlagen oder anderen Bearbeitungsmaschinen zur Bearbeitung von Holzbalken; Brettern, Platten oder anderen Strangmaterialien eingesetzt werden. So können z.B. über einen Riemen- oder Kettentrieb auch Holzbalken transportiert oder die Bewegung eines während der Bearbeitung transportierten Holzbalkens erfasst werden. Zur Erfassung der Bewegung eines Holzbalkens kann der Riemen- oder Kettentrieb beispielsweise derart angeordnet werden, dass der untere oder obere Trumm des riemen- oder kettenförmigen Antriebsorgans zur Anlage an einer der Längsseiten des in Längsrichtung transportierten Holzbalkens gelangt, so dass das Antriebsorgan bei einer Verschiebung des Balkens mitgenommen wird. Durch Erfassung der Drehbewegung eines der beiden Antriebsscheiben des Riemen- oder Kettentriebs kann so die Bewegung des Holzbalkens erfasst werden.

Allerdings besteht bei solchen Messeinrichtungen das Problem, dass zwischen dem Holzbalken und dem Riemen- oder Kettentrieb ein Schlupf auftreten kann, was zu Messungenauigkeiten führt. Ein Schlupf könnte dadurch verhindert werden, dass am Riemen oder der Kette fest angeordnete, nach außen vorstehende Dorne, Stifte oder andere Mitnahmeelemente vorgesehen werden, die formschlüssig in das bewegte Bauteil eingreifen oder fest auf diesem aufliegen, um eine Relativbewegung zwischen dem Riemen bzw. der Kette und dem bewegten Bauteil zu vermeiden. Bei der Anordnung solcher fester Mitnehmer an einem über Antriebs- oder Umlenkscheiben geführten Riemen oder einer Kette ergibt sich allerdings das Problem, dass sich der Abstand zwischen den an der Außenseite des Riemens oder der Kette vorstehenden Mitnahmeelementen im Bereich der Antriebs- oder Umlenkscheiben aufgrund der dort vorhandenen Krümmung des Riemens bzw. der Kette verändert. Die von der Außenseite des Riemens oder der Kette nach außen vorstehenden Enden oder Spitzen der Mitnahmeelemente weisen bei der Umlenkung des Riemens bzw. der Kette über die Antriebs- oder Umlenkscheiben an der Außenseite eine höhere Geschwindigkeit als in den Bereichen auf, in denen der Riemen bzw. die Kette nicht gekrümmt ist. Nur wenn der Antriebsriemen oder die Kette keine Krümmung aufweist, führen die an der Außenseite des Riemens vorstehenden Mitnahmeelemente eine dem Wirkdurchmesser entsprechende Bewegung aus. Da die Mitnahmeelemente aber in der Regel bereits im Bereich der Antriebsscheiben vor der vollständigen Streckung des Antriebsorgans mit dem bewegten Bauteil in Eingriff gelangen, können sich Ungenauigkeiten bei der Messung ergeben.

Aufgabe der Erfindung ist es, einen Riemen- oder Kettentrieb der eingangs genannten Art zu schaffen, der zur genauen Erfassung der Bewegung oder zum exakten Transport eines Bauteils geeignet ist.

Diese Aufgabe wird durch einen Riemen- oder Kettentrieb mit den Merkmalen des Anspruchs 1 gelöst. Zweckmäßige Weiterbildungen und vorteilhafte Ausführungsformen der Erfindung sind Gegenstand der Unteransprüche.

Bei dem erfindungsgemäßen Riemen- oder Kettentrieb sind in dem riemen- oder kettenförmigen Antriebsorgan quer zur Bewegungsrichtung des Antriebsorgans zwischen einer Rückzugsstellung und einer ausgefahrenen Mitnahmestellung bewegliche Mitnahmeelemente angeordnet. Dem Antriebsorgan ist außerdem eine Betätigungseinrichtung zugeordnet, durch welche die Mitnahmeelemente in einem nicht gekrümmten Bereich des Antriebsorgans in die Mitnahmestellung bewegbar sind. Durch die erfindungsgemäße Lösung wird gewährleistet, dass die am Riemen oder der Kette vorgesehenen Mitnahmeelemente erst dann in die ausgefahrene Mitnahmestellung gelangen, wenn sich das Antriebsorgan in einer vollständig gestreckten, nicht mehr gekrümmten Lage befindet. Nur in dieser Lage kann ein gleichbleibender, definierter Abstand zwischen den von der Außenseite des Antriebsorgans vorstehenden Mitnahmeelementen gewährleistet und damit eine fehlerhafte Messung oder ein ungenauer Transport beim Einsatz des Riemen- oder Kettenantriebs als Mess- bzw. Transporteinrichtung vermieden werden.

In einer besonders zweckmäßigen Ausführungsform der Erfindung ist die Betätigungseinrichtung zwischen den Antriebs- oder Umlenkscheiben derart angeordnet, dass die Mitnahmeelemente durch Bewegung des Antriebsorgans nur in einem z.B. an einem bewegten Balken oder anderen Bauteil anliegenden Trumm des Antriebsorgans in ihre Mitnahmestellung gedrückt werden, während die Mitnahmeelemente in dem anderen Trumm und in den durch die Umlenkung des Antriebsorgans um die Antriebsscheiben gekrümmten Bereichen des Antriebsorgans in ihrer Rückzugstellung verbleiben.

Für den Einsatz an Holzbauteilen können die Mitnahmeelemente z.B. als Mitnahmestifte mit einem Kopf an der Innenseite des Antriebsorgans und einer in der Mitnahmestellung gegenüber der Außenseite des Antriebsorgans nach außen vorstehenden Mitnahmespitze ausgeführt sein. Die Mitnahmespitze kann sich in der Mitnahmestellung in das Holzbauteil eindrücken und für eine schlupffreie Verbindung zwischen dem Antriebsorgan und dem Holzbalken sorgen. Die Mitnahmeelemente können aber auch als bewegliche Auflagepolster oder auf andere geeignete Weise ausgebildet sein.

Die Mitnahmeelemente werden auf einfache Weise durch geeignete Rückstellelemente in ihre Rückzugsstellung gedrückt. Die Rückstellelemente können z.B. als Ringe aus Gummi oder einem anderen elastisch federnden Material ausgebildet sein. Die Rückstellelemente können aber auch Federn oder dgl. sein.

Die Betätigungseinrichtung für die Bewegung der Mitnahmeelemente zwischen der Rückzugsstellung und der ausgefahrenen Mitnahmestellung kann in einer konstruktiv einfachen Ausführung aus zwei voneinander beabstandeten Führungsschienen bestehen, zwischen denen ein tellerförmiger Kopf der Mitnahmeelemente geführt wird.

Mindestens einer der Antrieb- oder Umlenkscheiben kann ein Sensor oder eine andere geeignete Einrichtung zur Erfassung deren Drehbewegung zugeordnet sein. Die Bewegung des Antriebsorgans kann auch direkt oder über eine weitere Spann- und Umlenkrolle erfasst werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen erfindungsgemäßen Riementrieb in einer Seitenansicht.
- **Figur 2**: eine Teilansicht des Riementriebs von Figur 1;
- **Figur 3**: eine Schnittansicht entlang der Linie B-B von Figur 2 und
- **Figur 4**: eine Schnittansicht entlang der Linie A-A von Figur 2.

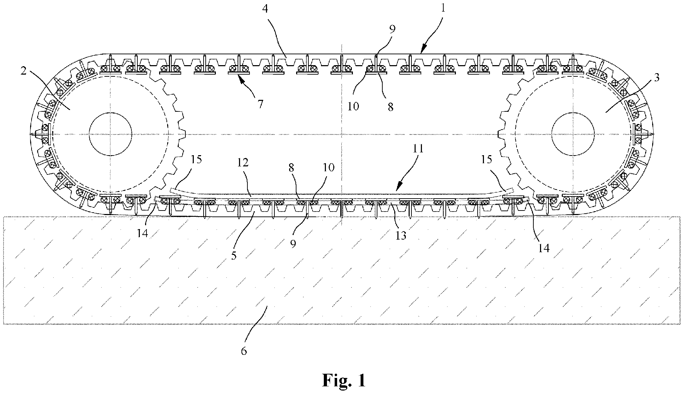

Der in Figur 1 schematisch dargestellte Riementrieb enthält ein hier als Zahnriemen ausgebildetes riemenförmiges Antriebsorgan 1, das über zwei hier als Zahnscheiben ausgeführte Antriebs- oder Umlenkscheiben 2 und 3 geführt ist. Der Riementrieb ist derart angeordnet, dass der obere Trumm 4 des riemenförmigen Antriebsorgans 1 frei liegt, während der untere Trumm 5 des riemenförmigen Antriebsorgans 1 mit seiner Außenseite einer Längsseite eines in Längsrichtung transportierten Holzbalkens oder eines anderen bewegten Bauteils 6 zugewandt ist.

Der Riementrieb ist bei dem gezeigten Ausführungsbeispiel Teil einer Messeinrichtung zur Erfassung der Bewegung des in Längsrichtung bewegten Bauteils 6, wobei einer der beiden Antriebs- oder Umlenkscheiben 2 oder 3 mit einem hier nicht dargestellten Sensor oder einer anderen geeigneten Einrichtung zur Erfassung der Drehbewegung der Antriebs- oder Umlenkscheiben 2 bzw. 3 verbunden ist. Das Antriebsorgan 1 liegt an dem in Längsrichtung bewegten Bauteil 6 so an, dass durch eine Verschiebung des z.B. auf einer Auflage transportierten Bauteils 6 das Antriebsorgan 1 mitgenommen wird. Durch Erfassung der Drehbewegung eines der beiden Antriebs- oder Umlenkscheiben 2 bzw. 3 kann so die Bewegung des Bauteils 4 erfasst werden.

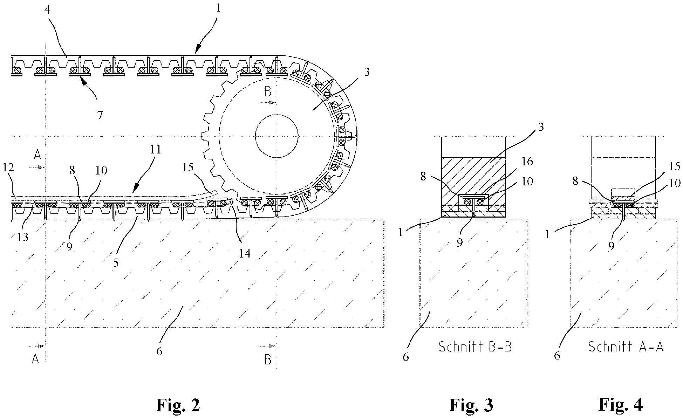

Wie aus den Figuren 1 bis 4 hervorgeht, sind in dem riemenförmigen Antriebsorgan 1 mehrere quer zur Bewegungsrichtung des Antriebsorgans 1 bewegliche Mitnahmeelemente 7 angeordnet. Die Mitnahmeelemente 7 sind innerhalb des Antriebsorgans 1 zwischen einer in Figur 3 dargestellten Rückzugsstellung und einer in Figur 4 gezeigten Mitnahmestellung bewegbar. Bei dem gezeigten Ausführungsbeispiel sind die im Antriebsorgan 1 verschiebbar geführten Mitnahmeelemente 7 als Mitnahmestifte mit einem tellerförmigen Kopf 8 an der Innenseite des riemenförmigen Antriebsorgans 1 und einem Stift 9 mit einer in der Mitnahmestellung gegenüber der Außenseite des Antriebsorgans 1 nach außen vorstehenden Spitze ausgeführt. Die stiftförmigen Mitnahmeelemente 7 werden durch Rückstellelemente 10 in ihre Rückzugsstellung gedrückt. Bei der in der Zeichnung gezeigten Ausführung sind die Rückstellelemente 10 als Ringe aus Gummi oder einem anderen elastisch federnden Material ausgebildet. Die Rückstellelemente 10 sind zwischen dem Kopf 8 der Mitnahmeelemente 7 und der Innenseite des riemenförmigen Antriebsorgans 1 eingelegt.

Zur Verschiebung der Mitnahmeelemente 7 in die Mitnahmestellung ist dem Antriebsorgan 1 eine Betätigungseinrichtung 11 zugeordnet, durch welche die Mitnahmeelemente 5 in die Mitnahmestellung bewegbar sind. Die Betätigungseinrichtung 11 ist derart ausgebildet und angeordnet, dass die Mitnahmeelemente 7 nur in dem nicht gekrümmten Bereich des an dem Bauteil 4 anliegenden unteren Trumms 5 des Antriebsorgans 1 in ihre Mitnahmestellung gedrückt werden, während die Mitnahmeelemente 7 im nicht am Bauteil 6 anliegenden freien Trumm 4 und in den durch die Umlenkung des Antriebsorgans 1 um die Antriebs- oder Umlenkscheiben 2 und 3 bedingten gekrümmten Bereichen des Antriebsorgans 1 in ihrer Rückzugstellung bleiben.

Die im Bereich des unteren Trumms 5 zwischen den beiden Antriebs- oder Umlenkscheiben 2 und 3 angeordnete Betätigungseinrichtung 11 besteht aus einer oberen Führungsschiene 12 und einer dazu parallelen unteren Führungsschiene 13, zwischen denen der tellerförmige Kopf 8 des Mitnahmeelements 7 zur Verschiebung zwischen der in Figur 3 gezeigten Rückzugsstellung und der in Figur 4 gezeigten Mitnahmestellung geführt ist. Die beiden Führungsschienen 12 und 13 haben an ihren beiden Enden nach oben gebogene Umlenkbereiche 14 bzw. 15, die in der Nähe der Antriebsscheiben 2 und 3 angeordnet sind.

Wie aus den Figuren 3, ist in den beiden als Zahnscheiben ausgeführten Antriebschieben 2 und 3 an deren Außenseite eine rechteckige Nut 16 zur Aufnahme des Kopfs 8 und der Rückstellelemente 10 der Mitnahmeelemente 7 vorgesehen. Über den mit der Spitze versehenen Stift 9 sind die Mitnahmeelemente 7 in entsprechenden Durchgängen des riemenförmigen Antriebsorgans 1 verschiebbar geführt.

Wenn z.B. das in Figur 1 gezeigte Bauteil 6 in Längsrichtung nach links verschoben wird, wird das riemenförmige Transportorgan 1 mitgenommen und treibt die beiden Antriebs- oder Umlenkscheiben 2 und 3 in Uhrzeigerrichtung an. Durch Erfassung der Drehbewegung einer Antriebs- oder Umlenkscheibe kann dann die Bewegung des Bauteils ermittelt werden. Von den neben der rechten Antriebsscheibe 3 angeordneten Umlenkbereichen 14 und 15 der Führungsschienen 12 und 13 werden die Mitnahmeelemente 7 im Bereich des nicht mehr gekrümmten und eben auf dem Bauteil 6 aufliegenden Transportriemens 1 entgegen der Kraft der zunehmend zusammengedrückten Rückstellelemente 10 nach unten in ihre Mitnahmestellung gedrückt, wobei sich die gegenüber der Außenseite des riemenförmigen Antriebsorgans 1 vorstehenden Spitzen der Stifte 9 in das Bauteil 6 eindrücken und für eine schlupffreie Verbindung zwischen dem Antriebsorgan 1 und dem Bauteil 6 sorgen. Durch die neben der linken Antriebsscheibe 2 angeordneten Umlenkbereiche 14 und 15 der Führungsschienen 12 und 13 können sich die Mitnahmeelemente 7 durch die sich dann wieder entspannenden Rückstellelemente 10 in die Rückzugsstellung bewegen.

Anstelle des vorstehend beschriebenen riemenförmigen Antriebsorgans kann auch ein kettenförmiges Antriebsorgan zum Einsatz gelangen. Der Riemen- oder Kettentrieb ist auch nicht auf den erläuterten Einsatz als Messeinrichtung zur Erfassung der Bewegung eines für die Bearbeitung transportierten Bauteils aus Holz oder dgl. beschränkt. Der erfindungsgemäße Riemen- oder Kettentrieb kann z. B. auch als Transporteinrichtung eingesetzt werden, indem der Riemen- oder Kettentrieb durch einen Antriebsmotor angetrieben wird und der Riemen- bzw. Kettentrieb für den Transport des Werkstücks dient.

## Patentansprüche

1. Riemen- oder Kettentrieb mit mindestens einem, über Antriebs- oder Umlenkscheiben (2, 3) geführten, riemen- oder kettenförmigen Antriebsorgan (1), **dadurch gekennzeichnet, dass** in dem riemen- oder kettenförmigen Antriebsorgan (1) quer zur Bewegungsrichtung des Antriebsorgans (1) zwischen einer Rückzugsstellung und einer ausgefahrenen Mitnahmestellung bewegliche Mitnahmeelemente (7) angeordnet sind und dass dem Antriebsorgan (1) eine Betätigungseinrichtung (11) zugeordnet ist, durch welche die Mitnahmeelemente (7) in einem nicht gekrümmten Bereich des Antriebsorgans (1) in die Mitnahmestellung bewegbar sind.

2. Riemen- oder Kettentrieb nach Anspruch 1, **dadurch gekennzeichnet, dass** die Betätigungseinrichtung (11) zwischen den Antriebs- oder Umlenkscheiben (2, 3) derart angeordnet ist, dass die Mitnahmeelemente (7) durch Bewegung des Antriebsorgans (1) nur in einem Trumm (5) des Antriebsorgans (1) in ihre Mitnahmestellung gedrückt werden, während die Mitnahmeelemente (7) in dem anderen Trumm (6) und in den durch die Umlenkung des Antriebsorgans (1) um die Antriebs- oder Umlenkscheiben (2, 3) gekrümmten Bereichen des Antriebsorgans (1) in ihrer Rückzugstellung verbleiben.

3. Riemen- oder Kettentrieb nach Anspruch als 1 oder 2, **dadurch gekennzeichnet, dass** die Mitnahmeelemente (7) als Mitnahmestifte mit einem Kopf (8) an der Innenseite des Antriebsorgans (1) und einem in der Mitnahmestellung gegenüber der Außenseite des Antriebsorgans (1) nach außen vorstehenden Stift (9) ausgeführt.

4. Riemen- oder Kettentrieb nach einem der Ansprüche 1 bis 3, **dadurch gekennzeichnet, dass** die Mitnahmeelemente (7) durch Rückstellelemente (10) in ihre Rückzugsstellung gedrückt werden.

5. Riemen- oder Kettentrieb nach Anspruch 4, **dadurch gekennzeichnet, dass** die Rückstellelemente (10) als Ringe aus einem elastisch federnden Material ausgebildet sind.

6. Riemen- oder Kettentrieb nach einem der Ansprüche 3 bis 5, **dadurch gekennzeichnet, dass** die Betätigungseinrichtung (11) aus zwei voneinander beabstandeten Führungsschienen (12, 13) besteht, zwischen denen der Kopf (8) der Mitnahmeelemente (7) geführt wird.

7. Riemen- oder Kettentrieb nach Anspruch 6, **dadurch gekennzeichnet, dass** die Führungsschienen (12, 13) an ihren beiden Enden Umlenkbereiche (14, 15) aufweisen.

8. Riemen- oder Kettentrieb nach einem der Ansprüche 3 bis 7, **dadurch gekennzeichnet, dass** die Antriebs- oder Umlenkscheiben (2, 3) eine Nut (16) zur Aufnahme des Kopfs (8) und des Rückstellelements (10) der Mitnahmeelemente (7) aufweisen.

9. Riemen- oder Kettentrieb nach einem der Ansprüche 1 bis 8 **dadurch gekennzeichnet, dass** mindestens einer der Antriebs- oder Umlenkscheiben (2, 3) oder dem Antriebsorgan (1) eine Einrichtung zur Erfassung der Drehbewegung der Antriebs- oder Umlenkschieben (2, 3) bzw. zur Erfassung der Bewegung des Antriebsorgans (1) zugeordnet ist.
